Europäisches Patentamt

European Patent Office

Office européen des brevets

(19)

(11) Veröffentlichungsnummer : **0 124 738**
**B1**

(12) **EUROPÄISCHE PATENTSCHRIFT**

(45) Veröffentlichungstag der Patentschrift :
**10.09.86**

(51) Int. Cl.⁴ : **B 25 J 13/00**

(21) Anmeldenummer : **84103257.6**

(22) Anmeldetag : **23.03.84**

(54) Industrieroboter mit elektrischen Drehstrom-Einzelantrieben.

(30) Priorität : 12.04.83 DE 3313167

(43) Veröffentlichungstag der Anmeldung :
**14.11.84 Patentblatt 84/46**

(45) Bekanntmachung des Hinweises auf die Patenterteilung : **10.09.86 Patentblatt 86/37**

(84) Benannte Vertragsstaaten :
**AT BE CH DE FR GB IT LI SE**

(56) Entgegenhaltungen :
DE-A- 3 009 994
DE-A- 3 048 548
US-A- 4 349 310

(73) Patentinhaber : **Manutec Gesellschaft für Automatisierungs- und Handhabungssysteme mbH
Gründlacher Strasse 248
D-8510 Fürth (DE)**

(72) Erfinder : **Eberle, Manfred
Würzburger Ring 70
D-8520 Erlangen (DE)**
Erfinder : **Hartmann, Rudolf-Peter
Storchenweg 14
D-8501 Oberasbach (DE)**

(74) Vertreter : **Mehl, Ernst, Dipl.-Ing. et al
Postfach 22 01 76
D-8000 München 22 (DE)**

**Beschreibung**

Die Erfindung bezieht sich auf einen Industrieroboter mit elektrischen Drehstrom-Einzelantrieben für die Bewegungen in den einzelnen Achsen.

Zum elektrischen Antrieb der einzelnen Achsen von Industrierobotern werden heute vielfach Gleichstrommotoren, z. B. in Form von Scheibenläufermotoren, verwendet (vgl. z. B. Werkstatt und Betrieb 1976, S. 305, oder DE-OS-24 52 345). Diese Gleichstromantriebe verfügen über eine sehr gute Regelbarkeit, sind aber andererseits von der Wartungs- und der Gewichtsseite her vergleichbaren Drehstrommotoren in gewisser Weiser unterlegen. Folgt man konsequent dem Gedanken des Einzelantriebes für jede Achse bei z. B. einem Gelenkroboter, ist es verständlich, daß hier der Drehstromantrieb Vorteile bieten würde, falls es gelingt, ein derartiges Antriebssystem speziellen Forderungen des Roboterbetriebes anzupassen.

Die Aufgabe der vorliegenden Erfindung besteht demgemäß darin, ein Antriebssystem mit robusten und zuverlässigen Drehstrom-Einzelantrieben zu schaffen, mit dem die dauernd aufeinanderfolgenden Beschleunigungs- und Bremsvorgänge ohne großen Aufwand energiesparend durchführbar sind.

Diese Aufgabe wird erfindungsgemäß durch die Kombination folgender Merkmale gelöst :

a) die permanenterregten Drehstrommotoren sind jeweils für sich über regelbare Stromrichter an einen gemeinsamen Gleichspannungszwischenkreis angeschlossen, der über einen Stromrichter aus einem Drehstromnetz gespeist ist und

b) die im Gleichspannungskreis vorgesehene Kondensatorbatterie ist für die Aufnahme der bei der dynamischen Abbremsung der Drehstrommotoren über die Stromrichter anfallenden elektrischen Energie ausgelegt.

Auf diese Weise kann die bei der dynamischen Bremsung anfallende Energie zwischengespeichert und wieder nutzbar gemacht werden ; sei es, daß die Energie aller Antriebe gleichzeitig zurückgespeist und dann gleichzeitig wieder benötigt wird oder sei es, daß die einzelnen Antriebe zeitlich verschoben Energie in den Zwischenkreis einspeisen oder aus ihm herausnehmen.

Durch die vorgesehene große Kondensatorbatterie werden außerdem Netzspannungsschwankungen auf einfache Weise kompensiert und auch bei einem Netzausfall noch dafür gesorgt, daß bestimmte Bewegungen definiert zu einem Ende geführt werden können.

Die verwendete Kondensatorbatterie ist auf der einen Seite energiesparender als ein Verheizen der Bremsenergie in Bremswiderständen und erfordert auf der anderen Seite auch keinen aufwendigen und großen Stromrichter, der plötzlich auftretende größere Energiemengen zwischen Gleichspannungskreis und Drehstromnetz übertragen kann.

Im vorliegenden Zusammenhang sei bemerkt, daß es an sich bekannt ist, Spannungszwischenkreisumrichter, die aus zwei Stromrichtern bestehen, zur Speisung von Drehstromsynchron- oder Käfigläufermotoren zu benutzen und hierbei im Spannungswischenkreis einen Kondensator vorzusehen (vgl. z. B. Siemens-Druckschrift « Drehzahlveränderbare Antriebe Nr. E 319/1149, S. 22, 23).

Anhand eines in der Zeichnung dargestellten Ausführungsbeispiels sei die Erfindung näher erläutert ;

es zeigen :

Figur 1 das Prinzip der Speisung der Drehstromantriebe bei einem Gelenkroboter und

Figur 2 das Prinzipschaltbildt des Regelteils der einzelnen Stromrichter zur Speisung der Motoren.

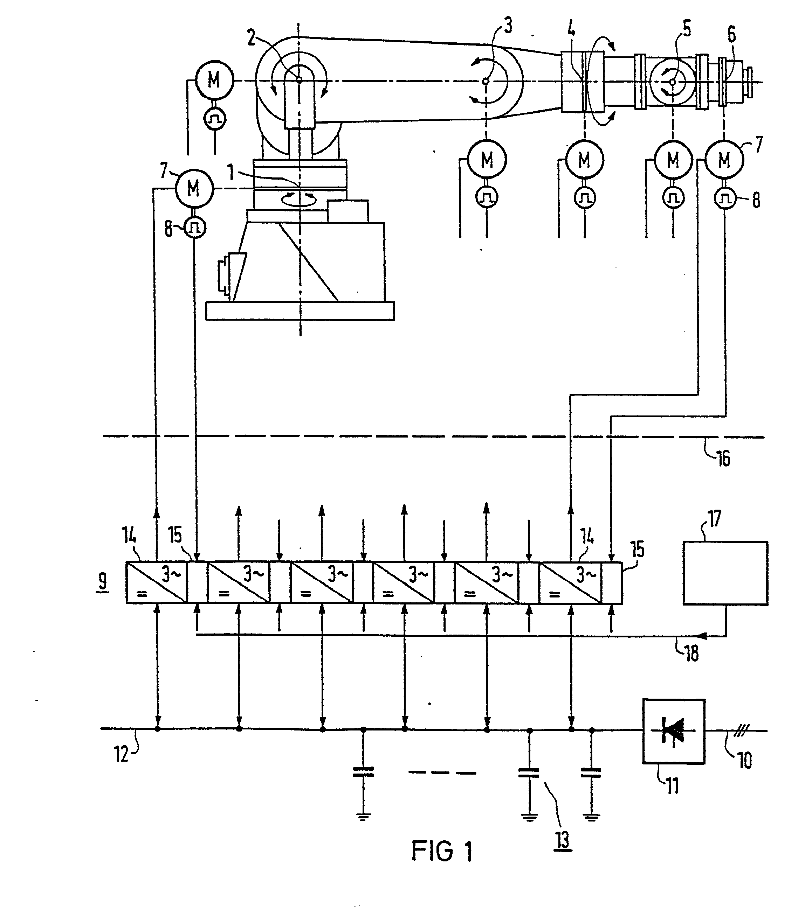

Der in Figur 1 schematisch dargestellte Gelenk-Industrieroboter hat sechs Gelenke 1 bis 6, durch die Drehungen in sechs Achsen möglich sind. Die zum Antrieb der einzelnen Gelenke 1 bis 6 dienenden permanterregten Drehstrommotoren 7 sind zusammen mit den zugehörigen Untersetzungsgetrieben und den an ihnen angeflanschten Weggebern 8 in die Gelenke integriert.

Das zur Speisung der Drehstrommotoren dienende System 9, das stationär in einem Schaltschrank angeordnet ist — wie durch die gestrichelte Linie 16 angedeutet — besteht aus einem an ein Drehstromnetz 10 angeschlossenen Stromrichter 11, der die Netzspannung in eine entsprechende Gleichspannung des Gleichspannungswischenkreises 12 umformt. Dem Gleichspannungswischenkreis ist eine mit 13 bezeichnete große Kondensatorbatterie zugeordnet, die zur Energiezwischenspeicherung dient. Für jeden der Motoren 7 ist ein eigener Stromrichter 14 vorgesehen, der die Spannung auf der Schiene 12 in variablen Drehstrom umformt. Jedem Stromrichter 14 ist ein Steuerteil 15 zugeordnet, das, wie durch den Pfeil 18 angedeutet, seine Steuerbefehle von der Robotersteuerung 17 erhält. Auf diese Weise können die einzelnen Bewegungen in den einzelnen Achsen indivuduell für sich gesteuert werden.

Wie eingangs bemerkt, ist die Besonderheit hier vor allem darin zu sehen, daß die bei der gleichzeitigen oder phasenverschobenen Bremsung in den Motoren 7 anfallende elektrische Energie durch entsprechende Aussteuerung der Stromrichter 14 in den Gleichspannungszwischenkris 12 zurückgeliefert und hier in ausreichendem Maße in der Kondensatorbatterie 13 gespeichert werden kann.

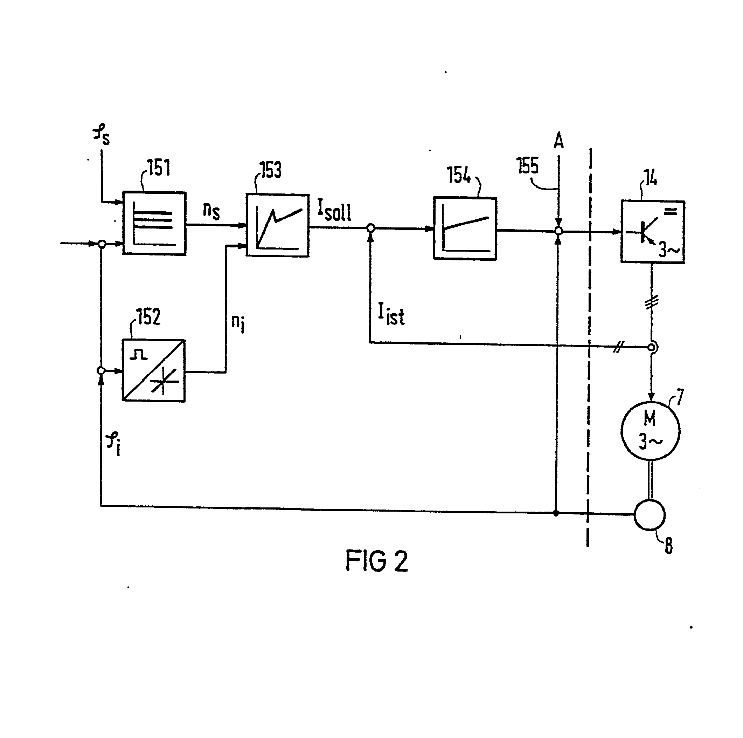

Figur 2 zeigt einige Einzelheiten des Steuerteiles 15, und zwar handelt es sich um eine Kaskadenregelung für Lage, Drehzahl und Strom. Wie ersichtlich, wird der Winkelistwert $\varphi_i$ des Gebers 8 mit einem von der Robotersteuerung 17 kom-

menden Winkelsollwert $\varphi_s$ in einem Lageregler 151 verglichen und hieraus die Drehzahl-führungsgröße $n_s$ für einen Drehzahlregler 153 gebildet. Dieser Drehzahlregler 153 erhält seinen Drehzahlistwert $n_i$ von einem Wandler 152, der diesen Wert aus der zeitlichen Änderung der Winkellage ermittelt. Die Ausgangsgröße des Drehzahlreglers 153 bildet den Stromführungs-sollwert $I_{soll}$ für einen Stromregler 154, dessen Istwert $I_{ist}$ dem Strom des Drehstrommotors 7 proportional ist. Der Ausgang dieses Reglers 154 steuert dann den Stromrichter (14) Transistorwechselrichter). Da bei einem Gelenkroboter die Bewegungen in den einzelnen Achsen auch jeweils von den Bewegungen in den vorhergehenden Achsen abhängig sind, wird zusätzlich noch bei 155 ein Korrekturfaktor A in den Stromregelkreis eingefügt.

## Patentansprüche

1. Industrieroboter mit elektrischem Drehstrom-Einzelantrieb für die Bewegungen in den einzelnen Achsen, gekennzeichnet durch die Kombination folgender Merkmale :

    a) die permanenterregten Drehstrommotoren (7) sind jeweils für sich über regelbare Stromrichter (14) an einen gemeinsamen Gleichspannungszwischenkreis (12) angeschlossen, der über einen Stromrichter (11) aus einem Drehstromnetz (10) gespeist ist, und

    b) die im Gleichspannungszwischenkreis (12) vorgesehene Kondensatorbatterie (13) ist für die Aufnahme der bei· der dynamischen Abbremsung der Drehstrommotoren (7) über die Stromrichter (14) anfallenden elektrischen Energie ausgelegt.

2. Industrieroboter nach Anspruch 1, dadurch gekennzeichnet, daß jedem der zur Speisung der Drehstrommotoren (7) dienenden Stromrichter (14) eine Kaskadenregelung (15) für Lage, Drehzahl und Strom zugeordnet ist.

## Claims

1. An industrial robot with three-phase single drive for the movements in the individual axes, characterised by the combination of the following features :

    a) each permanently excited three-phase motor (7) is independently connected to a common intermediate d. c. circuit (12), fed from a three-phase mains supply (10) via a current rectifier (11), using controllable current rectifiers (14), and

    b) the capacitor battery (13) arranged in the intermediate d. c. circuit (12) is designed to absorb the electric energy which occurs during dynamic deceleration of the three-phase motors (7) by means of the current rectifiers (14).

2. An industrial robot as claimed in Claim 1, characterised in that each of the current rectifiers (14) feeding the three-phase motors (7) is assigned a cascade control device (15) for position, number of revolutions and current.

## Revendications

1. Robot industriel comportant un dispositif d'entraînement électrique individuel à courant triphasé pour les déplacements suivant les différents axes, caractérisé par la combinaison des caractéristiques suivantes :

    a) les moteurs à courant triphasé (7) à excitation permanente sont raccordés respectivement par des redresseurs réglables (14) à un circuit intermédiaire commun à tension continue (12), qui est alimenté par l'intermédiaire d'un redresseur (11) à partir du réseau triphasé (10), et

    b) la batterie de condensateurs (13) prévue dans le circuit intermédiaire à tension continue (12) est conçue pour absorber l'énergie électrique délivrée par l'intermédiaire des redresseurs (14) lors du freinage dynamique du moteur à courant triphasé (7).

2. Robot industriel suivant la revendication 1, caractérisé par le fait qu'à chaque redresseur (14), utilisé pour alimenter les moteurs à courant triphasé (7), se trouve associé un dispositif de régulation en cascade (15) pour la position, la vitesse de rotation et le courant.

FIG 1

FIG 2